# EUROPÄISCHE PATENTSCHRIFT

(11) **EP 2 273 226 B1**
(45) Veröffentlichungstag und Bekanntmachung des Hinweises auf die Patenterteilung: **24.08.2016**
(21) Anmeldenummer: 09009563.9
(22) Anmeldetag: 23.07.2009
(51) Int. Cl.: F28D 20/02

(54) **Wärmespeichersystem**
Heat storage system
Système d'accumulation de chaleur

(30) Priorität: 09.03.2009 DE 102009012318
(43) Veröffentlichungstag der Anmeldung: 12.01.2011
(73) Patentinhaber: Rawema Countertrade Handelsgesellschaft mbH, 02625 Bautzen (DE)
(72) Erfinder: Golbs, Andreas, Dr., 45100 Selb (DE); Weber, Stefan, 31421 Ilsede (DE)
(74) Vertreter: Herrmann, Uwe

(56) Entgegenhaltungen:
- WO-A1-02/12814
- WO-A1-98/40684
- DE-A1-102005 024 051
- FR-A1- 2 325 003

## Beschreibung

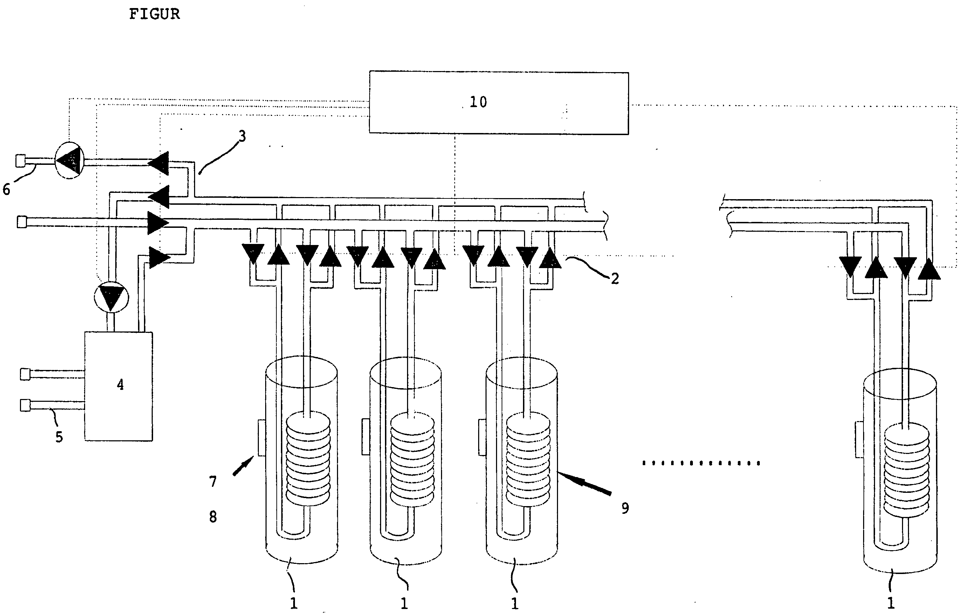

Die vorliegende Erfindung betrifft ein Wärmespeichersystem nach dem Oberbegriff des ersten Anspruchs. Solch im System ist bekannt aus der Figur 3 der WO 98/40684.

Derzeit sind zahlreiche Anwendungen, wie beispielsweise die Bereitstellung von Warmwasser in Gebäuden bekannt, für die die Speicherung von Wärme vorteilhaft und daher anzustreben ist. So ist es beispielsweise bekannt, tagsüber durch Sonneneinstrahlung erzeugte Wärme zu speichern, um diese dann bei fehlender oder vergleichsweise geringer Sonneneinstrahlung nutzen zu können.

Der vorliegenden Erfindung liegt die Aufgabe zugrunde, ein vorteilhaft arbeitendes Wärmespeichersystem zu schaffen. Erfindungsgemäß ist ein Wärme speichersystem nach Anspruch 1 vorgeschen.

Erfindungsgemäß ist somit vorgesehen, dass das Wärmespeichersystem eine Mehrzahl von Speicherbehältnissen aufweist, die ein Latentwärmespeichermedium, beispielsweise ein Salzhydrat oder vorzugsweise ein anderes bei Wärmeabfuhr kristallisierendes Medium umfassen. Über die Zufuhrleitungen ist den Latentwärmespeichern Wärme zuführbar und über die Abfuhrleitungen ist bei Bedarf Wärme aus diesen abführbar.

Die Zufuhr und Abfuhr von Wärme wird durch eine Steuereinheit gesteuert oder geregelt, die auf Ventile einwirkt, die die Zufuhr von Wärme bzw. eines Wärmeträgermediums bzw. die Abfuhr von Wärme bzw. des Wärmeträgermediums steuert oder regelt.

Die Erfindung betrifft ein Wärmespeichersystem mit einem oder mehreren Speicherbehältnissen in denen sich ein Latentwärmespeichermedium befindet, wobei das Wärmerspeichersystem derart ausgeführt ist, dass es in einem ersten Betriebsmodus betreibbar ist, in dem sensible Wärme des Latentwärmespeichermediums genutzt wird, und dass es in einem zweiten Betriebsmodus betreibbar ist, in dem die Schmelzwärme des Latentwärmespeichermediums genutzt wird.

Unter "sensibler Wärme" ist die Wärme bzw. der Wärmegehalt des Latentwärmespeichermediums zu verstehen, der abgezogen werden kann, ohne dass es zu einem Phasenwechsel kommt. Erfindungsgemäß ist nach dieser Ausgestaltung der Erfindung vorgesehen, dass das Wärmespeichersystem in dem ersten Betriebsmodus oder auch in dem zweiten Betriebsmodus oder auch in beiden Betriebsmodi betreibbar ist. Die Wahl des Betriebsmodus wird durch eine Steuereinheit vorgegeben, die je nach Wärmebedarf das Wärmespeichersystem in dem ersten oder in dem zweiten oder in beiden Betriebsmodi beispielsweise simultan oder aufeinanderfolgend betreibt.

Erfindungsgemäß ist vorgesehen, dass mehrere oder alle der Speicherbehältnisse über Ventile einzeln ansteuerbar sind. So ist es möglich, selektiv eines oder mehrere der Speicherbehältnisse anzusteuern, das heißt diese mit Wärme zu "beladen" oder Wärme aus diesen abzuziehen.

Die im Rahmen der Erfindung verwendeten Begriffe "Beladen" und "Beladung," oder "entladen" und "Entladung" bedeuten die Zufuhr von Wärme in das Latentwärmespeichermedium bzw. die Abfuhr von Wärme aus dem Latentwärmespeichermedium.

Erfindungsgemäß ist vorgesehen, dass die Wahl des Betriebsmodus automatisch erfolgt und dass die Betriebsmodi voneinander unabhängig wählbar sind.

So ist es beispielsweise denkbar, dass automatisch in Abhängigkeit von dem abgerufenen Wärmebedarf der erste Betriebsmodus oder der zweite Betriebsmodus oder simultan oder sequentiell beide Betriebsmodi einstellbar sind.

In weiterer Ausgestaltung der Erfindung ist vorgesehen, dass das Wärmespeichersystem einen oder mehrere Wärmekreisläufe aufweist oder mit diesen in Verbindung steht, über die Wärme aus dem oder den Speicherbehältnissen einem oder mehreren Wärmeverbrauchern zuführbar ist.

Denkbar ist es, dass das Wärmespeichersystem wenigstens einen Wärmekreislauf aufweist oder mit wenigstens einem Wärmekreislauf in Verbindung steht, in dem wenigstens ein Wärmetauscher zur Beheizung von Brauchwasser vorgesehen ist. So ist es beispielsweise denkbar, die in den Latentwärmespeichermedien gespeicherte Wärme zur Erwärmung von Brauchwasser beispielsweise im Haushalt heranzuziehen.

In weiterer Ausgestaltung der Erfindung ist vorgesehen, dass das Wärmespeichersystem wenigstens einen Wärmekreislauf aufweist oder mit diesem in Verbindung steht, der als Heizkreislauf dient. So ist es möglich, die in den Latentwärmespeichermedien gespeicherte Wärme zur Beheizung beispielsweise eines Gebäudes heranzuziehen.

In weiterer Ausgestaltung der Erfindung ist vorgesehen, dass die Steuereinheit mit wenigstens einem Sensor in Verbindung steht, der ein für den Wärmebedarf wenigstens einer Verbrauchsstelle und/oder für den Wärmegehalt wenigstens eines Speicherbehältnisses repräsentatives Signal abgibt, und dass die Steuereinheit in Abhängigkeit von dem wenigstens einen Sensorssignal das oder die Ventile des Leitungssystems der Speicherbehältnisse ansteuert.

In weiterer Ausgestaltung der Erfindung ist vorgesehen, dass in dem ersten Betriebsmodus wenigstens ein Speicherbehältnis zugeschaltet wird, wenn die Menge der sensitiven Wärme der bereits zugeschalteten Speicherbehältnisse nicht ausreichend ist.

Weiterhin kann vorgesehen sein, dass von dem ersten in den zweiten Betriebsmodus umgeschaltet wird, wenn die sensitive Wärme des Latentwärmespeichermediums erschöpft ist und/oder dass die Steuereinheit derart ausgeführt ist, dass sie beim Beladen der Speicherbehältnisse zunächst dem oder den Speicherbehältnissen mit dem geringsten oder einem vergleichsweise geringen Wärmegehalt Wärme zuführt nach dessen/deren Beladung, vorzugsweise nach dessen/deren vollständiger Beladung, auf ein oder mehrere weitere Speicherbehältnisse umschaltet, so dass diesem/diesen Wärme zugeführt wird.

In weiterer Ausgestaltung der Erfindung ist vorgesehen, dass das Speicherbehältnis eine Breite oder Tiefe oder einen Durchmesser < 50 cm, vorzugsweise < 30 cm und besonders bevorzugt im Bereich von 5 cm bis 15 cm aufweist. Diese geringen Dimensionen erlauben es, das Latentwärmespeichersystem oder zumindest das oder die Speicherbehältnisse für den ortsfesten, das heißt stationären Betrieb platzsparend in Wände zu integrieren oder in einer Vorwandmontage auszuführen.

Wie ausgeführt, handelt es sich bei dem Latentwärmespeichermittel vorzugsweise um ein solches Speichermittel, das bei Wärmeabfuhr kristallisiert und bei Wärmezufuhr in den flüssigen Zustand übergeht.

Weiterhin kann vorgesehen sein, dass das Wärmespeichersystem mit einer Wärmequelle, insbesondere mit einer Solaranlage, mit einem Brenner zur Verbrennung von Holz, Holzpellets, Öl oder Gas, etc. in Verbindung steht oder eine solche Wärmequelle umfaßt. Diese Wärmequelle steht mit dem Leitungssystem in Verbindung und dient dazu, die auf diese Weise erzeugte Wärme bei Bedarf dem oder den Speicherbehältnissen zuzuführen.

Die Erfindung bezieht sich des weiteren auf ein Gebäude oder auf eine mobile Einheit, wie beispielsweise ein Wohnwagen, KFZ und dergleichen mit wenigstens einem Wärmespeichersystem nach einem der Ansprüche 1 bis 14.

Weitere Einzelheiten und Vorteile der Erfindung werden anhand eines in der Zeichnung dargestellten Ausführungsbeispiels näher erläutert.

Die einzige Figur zeigt ein Wärmespeichersystem gemäß der vorliegenden Erfindung in einer schematischen Ansicht.

Das Wärmespeichersystem gemäß der vorliegenden Erfindung weist eine Vielzahl von im Folgenden als Cluster 1 bezeichneten Speicherbehältnissen 1 auf. Diese Cluster 1 eignen sich insbesondere zur stationären Langzeitspeicherung von Wärme sowie zur verbr auchsbezogenen Bereitstellung von Wärme. Die Latentwärmespeichereinheit besteht wie in der Figur dargestellt aus einer beliebigen Anzahl von Speicherbehältern bzw. Clustern 1.

Die einzelnen Cluster 1 sind mit einem Latentwärmespeichermedium befüllt.

Das Wärmespeichersystem gemäß der vorliegenden Erfindung umfasst des Weiteren eine zentrale Steuereinheit 10 mit notwendiger Sensorik und Wärmekreisläufen zur Be- und Entladung der Latentwärmespeichermedien mit Wärme.

Wie dies aus der Figur hervorgeht, ist jeder der Cluster 1 über in einem Ventilblock 2 zusammengefasste Ventile einzeln ansteuerbar, d. h. jedem Cluster 1 ist selektiv Wärme zuführbar bzw. aus jedem Cluster 1 ist selektiv Wärme abführbar. Dies erfolgt durch entsprechende Schaltung der in dem Ventilblock 2 befindlichen Ventile, die ihrerseits durch die Steuereinheit 10 angesteuert werden.

Wie dies des Weiteren aus der Figur hervorgeht, kann die Wärme der in den Clustern 1 befindlichen Latentwärmespeichermedien dazu benutzt werden, einen Heizkreislauf zu betreiben, der in der Figur mit dem Bezugszeichen 6 gekennzeichnet ist. Dieser Heizkreislauf wird über die Schaltung entsprechender Ventile in dem Ventilblock 3 angesteuert.

Zusätzlich ist ein weiterer Wärmekreislauf vorgesehen, der den Plattenwärmetauscher 4 umfasst, der zur Bereitstellung von Warmwasser als Brauchwasser dient. Der Warmwasseranschluss beispielsweise eines Hauses ist mit dem Bezugszeichen 5 gekennzeichnet.

Auch dieser zusätzliche Wärmekreislauf ist durch entsprechende Ventile des Ventilsblocks 3 ansteuerbar. Die Ansteuerung der Ventile in dem Ventilblock 3 erfolgt ebenso wie die der Pumpen beider Wärmekreisläufe durch die Steuereinheit 10.

Wie dies aus der Figur des Weiteren hervorgeht, besteht jeder Cluster 1 aus einem rohrförmigen Gebilde, das mit dem Latentwärmespeichermedium, vorzugsweise Salzhydrat gefüllt ist. Durch dieses verläuft eine Leitung, die beispielsweise mit Wasser oder einem sonstigen Wärmeträgermedium gefüllt ist oder durchströmt wird, so dass das Wasser oder ein sonstiges Wärmeträgermedium, wie z.B. das Latentwärmespeichermedium selbst, je nach Betriebsweise entweder an das in dem Cluster 1 befindliche Latentwärmespeichermedium Wärme abgibt oder von diesem aufnimmt.

Die Latentwärmespeichereinheiten bzw. Cluster 1 geben vorzugsweise nach ihrem vollständigen Aufladen die gespeicherte Wärme in zwei getrennten Arbeitsweisen ab. Die Nachteile einer "Entweder-Oder-Arbeitsweise" werden somit vermieden, wenngleich auch eine solche Betriebsweise von der Erfindung mit umfaßt ist.

Die Nutzung der sensiblen, d. h. fühlbaren sowie der Schmelzwärme unabhängig voneinander ermöglicht die kurzzeitige sowie auch die langfristige Wärmebereitstellung.

Während die sensible Wärme vorzugsweise über kurze Zeit gespeichert wird und nach dem hier dargestellten Ausführungsbeispiel hauptsächlich für die Brauchwassererwärmung zur Verfügung steht, kann die Schmelz- bzw. Latentwärme langfristig bereitgestellt werden und beispielsweise zum Betrieb eines Heizungssystems dienen.

Das Betriebsverhalten bezüglich der Kurzzeitspeicherung von Wärme entspricht der üblichen am Markt verfügbaren Speichertechnik. Allerdings wird anstatt eines Warmwasserspeichers in dem hier dargestellten Ausführungsbeispiel ein Plattenwärmetauscher verwendet. Dies verhindert von vornherein die Gefahr der Verunreinigung bzw. des Legionellen-Befalls. Abgesehen davon werden Energieverluste durch Vorsorgemaßnahmen durch Temperaturerhöhungen zur Keimabtötung ausgeschlossen.

Die Beladung der Cluster 1 bzw. der daran befindlichen Latentwärmespeichermedien kann über alle verfügbaren Wärmequellen vorgenommen werden. Exemplarisch sind Solarthermische Anlagen, Holzpellets, Kamine, Öle oder Gasbrenner etc. zu nennen.

Der Beladungs- und Entladungsprozess, d. h. die Zufuhr von Wärme in die Cluster 1 sowie die Abfuhr von Wärme aus den Clustern 1 wird über die integrierte zentrale Steuerung 10 gesteuert bzw. geregelt.

Dabei kann vorgesehen sein, dass auf intelligente und vorausschauende Art und Weise einzelne Cluster 1 ausgewählt und be- oder entladen werden.

Die sensible Wärme kann ebenfalls bedarfsgerecht über die Steuerung 10 ausgewählt und bereitgestellt werden.

Die Langzeitspeicherung der Wärme erfolgt vorzugsweise in Form der unterkühlten Schmelze des Salzhydrates oder eines sonstigen geeigneten Latentwärmespeichermittels. Diese Speicherung ist langzeit- und temperaturstabil. Denkbar ist es, den Wärmeabruf in 1 kWh-Clustern 1 durchzuführen. Denkbar ist es, den Wärmeabruf sowie auch die Wärmezufuhr durch die zentrale Steuerung 10 vorzunehmen. Dabei kann vorgesehen sein, den Wärmeabruf bezüglich der gespeicherten Schmelzwärme dadurch vorzunehmen, dass ein Auslösemechanismus 8 am Cluster 1 den Rekristallisationsvorgang des Salzhydrates einleitet. Dabei erwärmt sich das Salzhydrat in Cluster 1 auf 58 °C und über den Wärmekreislauf kann die Wärme bereitgestellt werden. Selbstverständlich handelt es sich bei diesem Wert nur um einen Beispielswert, der die Erfindung nicht beschränkt. Der Auslösemechanismus 8 wird vorzugsweise automatisch und besonders bevorzugt durch die Steuerung 10 aktiviert.

Wie dies in der Figur angedeutet ist, sind die Cluster 1 rohrförmig ausgeführt. In dem dargestellten Ausführungsbeispiel haben sie einen Durchmesser von 10 cm. Sie lassen sich somit für den ortsfesten Einsatz platzsparend beispielsweise in Wände integrieren oder in die Vorwandmontage ausführen. Somit ist das vorliegende System besonders geeignet für die Installation in Gebäuden und kann dort beispielsweise für die Erwärmung von Brauchwasser und/oder als Teil oder zum Betrieb des Heizungssystems verwendet werden.

Die Beladung der Cluster 1 erfolgt von einer nicht näher dargestellten Wärmequelle über entsprechende Steuerungen der Ventile des Ventilblocks 2. Vorzugsweise wird solarthermisch erzeugte Wärme zugeführt. Die zentrale Steuereinheit 10 wählt einen vollständig entladenen Cluster 1 aus. Der Betriebszustand wird über eine Sensorik 7 am Cluster 1 erkannt. Nun wird über die eingebauten Ventilblöcke 2 und 3 der ausgewählte Cluster 1 hydraulisch ausgewählt und im Wärmekreislauf derart verschaltet, dass er mit Wärme "beladen" werden kann.

Der Beladevorgang wird solange fortgesetzt, bis die am oder im Cluster 1 befindliche Sensorik 7 die vollständige Lösung des Latentwärmespeichermediums erkennt. Danach ist der Beladungsvorgang abgeschlossen.

Steht weitere Wärme von einer Wärmequelle zur Verfügung, erfolgt die Auswahl eines weiteren Clusters 1 und seine Beladung kann wie beschrieben erfolgen.

Nach dem Abschluss der Beladung ist das Latentwärmespeichermedium auf einer Temperatur von ca. 70 °C bis 80 °C erwärmt. Aufgrund der Wärmedämmung kann die sensitive Wärme kurzzeitig gespeichert werden und zur Warmwasserbereitung genutzt werden.

Wird Warmwasser angefordert, erkennt dies die Steuereinheit 10 mittels der Sensorik an dem Wärmetauscher 4 und wählt einen Cluster 1 aus. Dieser wird sodann mit dem Plattenwärmetauscher 4 über die Ventilblöcke 2 und 3 bzw. über die Ventilstellung der darin befindlichen Ventile verschaltet. Durch die Abfuhr der sensitiven Wärme mittels eines Wärmeträgermediums wird das Latentwärmespeichermedium des entsprechend ausgewählten Clusters 1 abgekühlt und befindet sich dann je nach Menge der abgeführten Wärme beispielsweise in dem Zustand einer unterkühlten Schmelze.

Da der Kristallisationsvorgang noch nicht eingeleitet wurde, steht die gespeicherte Schmelzwärme darin weiterhin zur Verfügung.

Sollte die Wärmemenge eines Clusters 1 nicht zur Abdeckung des Bedarfs an Warmwasser ausreichen, können weitere Cluster 1 zugeschaltet werden. Sollte der Speicher bezogen auf die sensitive Wärmemenge aller Cluster 1 erschöpft sein, so lässt sich der Mehrbedarf über die Entladung der Schmelzwärme abdecken, wie dies nachfolgend beschrieben wird.

Die unterkühlte Schmelze kann Wärmeenergie über beliebig lange Zeiträume speichern. Wird diese gespeicherte Wärme zur Bedarfsdeckung benötigt, wählt die zentrale Steuereinheit 10 einen oder mehrere Cluster 1 aus.

Über den dargestellten Auslösmechanismus 8 wird der Kristallisationsprozess des Latentwärmespeichermediums eingeleitet. Der Cluster 1 wird über die Ventilblöcke 2 und 3 hydraulisch verschaltet und der Bedarfsquelle zugeschaltet. Bei der Bedarfsquelle kann es sich entweder um den Plattenwärmetauscher 4, d. h. um Wärme handeln, die zur Bereitstellung von Brauchwasser benötigt wird, oder um einen Heizkreislauf 6. Auch andere Wärmeverbraucher kommen in Betracht.

Somit ist es denkbar, dass ein Cluster 1 nach dem anderen ausgewählt wird, um aus diesem Wärme zu entnehmen. Denkbar ist es ebenfalls, dass das Beladen und/oder das Entladen der Cluster 1 gruppenweise erfolgt, dass also zeitgleich mehr als ein Cluster 1 be- und/oder entladen wird.

Wie dies aus der Figur weiter hervorgeht, kann das in dem Cluster 1 befindliche Leitungssystem für das Wärmeträgermedium einen Wärmetauscher 9 aufweisen, der in erster Linie zur Warmwasserbereitstellung dient. Dieser bzw. das darin befindliche oder diesen durchströmende Wärmeträgermedium nutzt in erster Linie die sensitive Wärme des in dem Cluster 1 befindlichen latenten Wärmespeichermittels. In dem oben dargestellten Ausführungsbeispiel wurde die Schmelzwärme des Salzhydrates angefordert, nachdem die sensitive Wärme der Latentwärmespeichermittel erschöpft war. Grundsätzlich ist es selbstverständlich auch denkbar, diese Vorgänge nicht sequentiell, sondern simultan durchzuführen. So ist es beispielsweise denkbar, einen oder einige Cluster für die Brauchwasserbereitung bzw. für eine Wärmesenke heranzuziehen, für die die sensitive Wärme ausreicht, und einen oder mehrere andere Cluster für den Heizbetrieb bzw. für eine Wärmesenke heranzuziehen, für die die durch Phasenänderung freiwerdende Wärme benötigt wird.

Besonders vorteilhaft ist es, wenn die Entladevorgänge sowie auch der Beladevorgang des oder der Cluster durch die Steuerung 10 vollautomatisch erfolgt.

## Patentansprüche

1. Wärmespeichersystem
mit einer Mehrzahl von Speicherbehältnissen (1), in denen sich ein Latentwärmespeichermedium befindet,
mit einem Leitungssystem mit Zufuhrleitungen zur Zufuhr von Wärme in die Speicherbehältnisse (1), mit Abfuhrleitungen zur Abfuhr von Wärme aus den Speicherbehältnissen (1), und mit einem oder mehreren Ventilen, mittels derer wenigstens eine Zufuhrleitung zu wenigstens einem der Speicherbehältnisse (1) und/oder wenigstens eine Abfuhrleitung aus wenigstens einem der Speicherbehältnisse (1) absperrbar oder im Durchfluss veränderbar ist, und
mit einer Steuereinheit (10), die mit dem oder den Ventilen in Verbindung steht und derart ausgeführt, dass sie diese ansteuert, wobei
mehrere oder alle der Speicherbehältnisse (1) über Ventile einzeln ansteuerbar sind, und **dadurch gekennzeichnet dass** die Steuereinheit so ausgeführt ist, dass diese über die Ventile mehrere oder alle der Speicherbehältnisse (1) einzeln ansteuert, d.h. dass diese selektiv mit Wärme beladen werden oder Wärme aus diesen abgezogen wird, wobei die Steuereinheit wahlweise einen ersten Betriebsmodus, in dem sensible Wärme des Latentwärmespeichermediums genutzt wird, und/oder einen zweiten Betriebsmodus, in dem die Schmelzwärme des Latentwärmespeichermediums genutzt wird, vorgibt und wobei die Wahl des Betriebsmodus automatisch in Abhängigkeit von dem abgerufenen Wärmebedarf erfolgt und die Betriebsmodi voneinander unabhängig wählbar sind.

2. Wärmespeichersystem nach Anspruch 1, **dadurch gekennzeichnet, dass** das Wärmespeichersystem einen oder mehrere Wärmekreisläufe aufweist oder mit diesen in Verbindung steht, über die Wärme aus dem oder den Speicherbehältnissen (1) einem oder mehreren Wärmeverbrauchern zuführbar ist.

3. Wärmespeichersystem nach Anspruch 1 oder 2, **dadurch gekennzeichnet, dass** das Wärmespeichersystem wenigstens einen Wärmekreislauf aufweist oder mit wenigstens einem Wärmekreislauf in Verbindung steht, in dem wenigstens ein Wärmetauscher vorzugsweise zur Beheizung von Brauchwasser vorgesehen ist.

4. Wärmespeichersystem nach einem der vorhergehenden Ansprüche, **dadurch gekennzeichnet, dass** das Wärmespeichersystem wenigstens einen Wärmekreislauf aufweist oder mit wenigstens einem Wärmekreislauf in Verbindung steht, der als Heizkreislauf dient.

5. Wärmespeichersystem nach einem der vorhergehenden Ansprüche, **dadurch gekennzeichnet, dass** die Steuereinheit mit wenigstens einem Sensor in Verbindung steht, der ein für den Wärmebedarf wenigstens einer Verbrauchsstelle repräsentatives Signal abgibt, und dass die Steuereinheit in Abhängigkeit von dem wenigstens einen Sensorssignal das oder die Ventile des Leitungssystems der Speicherbehältnisse (1) ansteuert.

6. Wärmespeichersystem nach einem der vorhergehenden Ansprüche, **dadurch gekennzeichnet, dass** in dem ersten und/oder zweiten Betriebsmodus wenigstens ein Speicherbehältnis (1) zugeschaltet wird, wenn die Menge der sensitiven Wärme bzw. der latenten Wärme der bereits zugeschalteten Speicherbehältnisse (1) nicht ausreichend ist.

7. Wärmespeichersystem nach einem der vorhergehenden Ansprüche, **dadurch gekennzeichnet, dass** von dem ersten in den zweiten Betriebsmodus umgeschaltet wird, wenn die sensitive Wärme des Latentwärmespeichermediums erschöpft ist.

8. Wärmespeichersystem nach einem der vorhergehenden Ansprüche, **dadurch gekennzeichnet, dass** die Steuereinheit (10) derart ausgeführt ist, dass sie bei der Zufuhr von Wärme in die Speicherbehältnisse (1) zunächst dem oder den Speicherbehältnissen mit dem geringsten oder einem relativ geringen Wärmegehalt Wärme zuführt nach dessen/deren Beladung auf wenigstens ein weiteres Speicherbehältnis (1) umschaltet, so dass dem wenigstens einen weiteren Speicherbehältnis (1) Wärme zugeführt wird.

9. Wärmespeichersystem nach einem der vorhergehenden Ansprüche, **dadurch gekennzeichnet, dass** das Speicherbehältnis (1) eine Breite oder Tiefe oder einen Durchmesser < 50 cm und vorzugsweise < 30 cm aufweist.

10. Wärmespeichersystem nach einem der vorhergehenden Ansprüche, **dadurch gekennzeichnet, dass** das Latentwärmespeichermittel derart ausgeführt ist, dass es bei Wärmeabfuhr kristallisiert.

11. Wärmespeichersystem nach einem der vorhergehenden Ansprüche, **dadurch gekennzeichnet, dass** das Wärmespeichersystem mit einer Wärmequelle, insbesondere mit einer Solaranlage, mit einem Brenner zur Verbrennung von Holz, Holzpellets, Öl oder Gas in Verbindung steht oder eine solche Wärmequelle umfasst.

12. Gebäude oder mobile Einheit, wie Wohnwagen, KFZ und dergleichen mit wenigstens einem Wärmespeichersystem nach einem der vorhergehenden Ansprüche.

## Claims

1. A heat storage system
with a plurality of storage tanks (1), in which a latent heat storage medium is disposed,
with a conduit system with supply conduits for supplying heat into the storage tanks (1), with discharge conduits for removing heat from the storage tanks (1), and with one or more valves by means of which at least one supply conduit to at least one of the storage tanks (1) and/or at least one discharge conduit from at least one of the storage tanks (1) can be shut off or be varied in its flow rate, and
with a control unit (10) which is connected with the one or more valves and is configured such that it actuates the same, wherein
several or all of the storage tanks (1) can be actuated individually via valves, and **characterized in that** the control unit is configured such that the same actuates several or all of the storage tanks (1) individually via the valves, i.e. that the same selectively are loaded with heat or heat is withdrawn from the same, wherein the control unit selectively specifies a first operating mode, in which sensible heat of the latent heat storage medium is utilized, and/or a second operating mode in which the heat of fusion of the latent heat storage medium is utilized, and wherein the choice of the operating mode is effected automatically in dependence on the heat requirement called for and the operating modes can be chosen independent of each other.

2. The heat storage system according to claim 1, **characterized in that** the heat storage system includes one or more heat circuits or is connected with the same, via which heat from the one or more storage tanks (1) can be supplied to one or more heat consumers.

3. The heat storage system according to claim 1 or 2, **characterized in that** the heat storage system includes at least one heat circuit or is connected with at least one heat circuit, in which at least one heat exchanger is provided for heating service water.

4. The heat storage system according to any of the preceding claims, **characterized in that** the heat storage system includes at least one heat circuit or is connected with at least one heat circuit which serves as heating circuit.

5. The heat storage system according to any of the preceding claims, **characterized in that** the control unit is connected with at least one sensor which emits a signal representative for the heat requirement of at least one consumption point, and that in dependence on the at least one sensor signal the control unit actuates the one or more valves of the conduit system of the storage tanks (1).

6. The heat storage system according to any of the preceding claims, **characterized in that** in the first and/or second operating mode at least one storage tank (1) is switched in when the amount of sensible heat or of latent heat of the storage tanks (1) already switched in is not sufficient.

7. The heat storage system according to any of the preceding claims, **characterized in that** switching over from the first into the second operating mode is effected when the sensible heat of the latent heat storage medium is exhausted.

8. The heat storage system according to any of the preceding claims, **characterized in that** the control unit (10) is configured such that when supplying heat into the storage tanks (1), it initially supplies heat to the one or more storage tanks with the smallest or a relatively small heat content, and after loading the same switches over to at least one further storage tank (1), so that heat is supplied to the at least one further storage tank (1).

9. The heat storage system according to any of the preceding claims, **characterized in that** the storage tank (1) has a width or depth or a diameter < 50 cm and preferably < 30 cm.

10. The heat storage system according to any of the preceding claims, **characterized in that** the latent heat storage medium is configured such that it crystallizes upon removal of heat.

11. The heat storage system according to any of the preceding claims, **characterized in that** the heat storage system is connected with a heat source, in particular with a solar system, comprising a burner for burning wood, wood pellets, oil or gas, or comprises such heat source.

12. A building or a mobile unit, such as a travel trailer, motor vehicle and the like with at least one heat storage system according to any of the preceding claims.

## Revendications

1. Système d'accumulation de chaleur,
comportant une multitude de récipients accumulateurs (1) dans lesquels se trouve un milieu accumulateur de chaleur latente,
comportant un système de conduites avec conduites d'amenée pour l'amenée de chaleur dans les récipients accumulateurs (1), des conduites d'évacuation pour évacuer la chaleur hors des récipients accumulateurs (1), et avec une ou plusieurs soupapes au moyen desquelles au moins une conduite d'amenée vers au moins un des récipients accumulateurs (1) et/ou au moins une conduite d'évacuation hors d'au moins un des récipients accumulateur (1) peut être fermée ou modifiée dans son débit, et comportant une unité de commande (10) qui est en liaison avec la ou les soupapes et qui est réalisée de telle sorte qu'elle pilote celles-ci,
plusieurs ou tous les récipients accumulateurs (1) étant pilotables individuellement via des soupapes, et **caractérisé en ce que** l'unité de commande est réalisée de telle sorte que celle-ci pilote individuellement via les soupapes plusieurs ou tous les récipients accumulateurs (1), c'est-à-dire que ceux-ci sont chargés sélectivement avec de la chaleur ou de la chaleur est retirée de ceux-ci, l'unité de commande prédéterminant au choix un premier mode de fonctionnement dans lequel de la chaleur sensible du milieu accumulateur de chaleur latente est utilisée, et/ou un deuxième mode de fonctionnement dans lequel la chaleur de fusion du milieu accumulateur de chaleur latente est utilisé, et le choix du mode de fonctionnement ayant lieu automatiquement en fonction du besoin en chaleur disponible et les modes de fonctionnement pouvant être choisis indépendamment les uns des autres.

2. Système d'accumulation de chaleur selon la revendication 1, **caractérisé en ce que** le système d'accumulation de chaleur présente un ou plusieurs circuits de chaleur ou est en liaison avec ceux-ci, via lesquels la chaleur peut être amenée depuis le ou les récipients accumulateurs (1) à un ou plusieurs consommateurs de chaleur.

3. Système d'accumulation de chaleur selon la revendication 1 ou 2, **caractérisé en ce que** le système d'accumulation de chaleur présente au moins un circuit de chaleur ou est en liaison avec au moins un circuit de chaleur dans lequel au moins un échangeur de chaleur est prévu de préférence pour chauffer de l'eau sanitaire.

4. Système d'accumulation de chaleur selon l'une des revendications précédentes, **caractérisé en ce que** le système d'accumulation de chaleur présente au moins un circuit de chaleur ou est en liaison avec au moins un circuit de chaleur qui sert de circuit de chauffage.

5. Système d'accumulation de chaleur selon l'une des revendications précédentes, **caractérisé en ce que** l'unité de commande est en liaison avec au moins un capteur qui fournit un signal représentatif pour les besoins en chaleur d'au moins un consommateur, et **en ce que** l'unité de commande pilote le ou les soupapes du système de conduites des récipients accumulateurs (1) en fonction dudit au moins un signal de capteur.

6. Système d'accumulation de chaleur selon l'une des revendications précédentes, **caractérisé en ce que** dans le premier et/ou le deuxième mode de fonctionnement est connecté au moins un récipient accumulateur (1) lorsque la quantité de la chaleur sensible ou de la chaleur latente des récipients accumulateurs (1) déjà connectés n'est pas suffisante.

7. Système d'accumulation de chaleur selon l'une des revendications précédentes, **caractérisé en ce qu'**on passe du premier mode de fonctionnement dans le deuxième mode de fonctionnement lorsque la chaleur sensible du milieu accumulateur de chaleur latente est épuisée.

8. Système d'accumulation de chaleur selon l'une des revendications précédentes, **caractérisé en ce que** l'unité de commande (10) est réalisée de telle sorte que lors de l'amenée de chaleur dans les récipients accumulateurs (1), elle amène de la chaleur tout d'abord au ou aux récipients accumulateurs (1) présentant la quantité de chaleur la plus faible ou une quantité de chaleur relativement faible, après son/leur chargement elle commute à au moins un autre récipient accumulateur (1), de telle sorte que de la chaleur est amenée à au moins un autre récipient accumulateur (1).

9. Système d'accumulation de chaleur selon l'une des revendications précédentes, **caractérisé en ce que** le récipient accumulateur (1) présente une largeur ou une profondeur ou un diamètre de < 50 cm et de préférence de < 30 cm.

10. Système d'accumulation de chaleur selon l'une des revendications précédentes, **caractérisé en ce que** l'accumulateur de chaleur latente est réalisé de telle sorte qu'il se cristallise lors de l'évacuation de la chaleur.

11. Système d'accumulation de chaleur selon l'une des revendications précédentes, **caractérisé en ce que** le système d'accumulation de chaleur est en liaison avec une source de chaleur, en particulier avec une installation solaire, avec un brûleur pour brûler du bois, des pellets de bois, du mazout ou du gaz ou comprend une telle source de chaleur.

12. Bâtiment ou unité mobile telle qu'une caravane, un véhicule automobile ou similaire comportant au moins un système d'accumulation de chaleur selon l'une des revendications précédentes.
